# FASCICULE DE BREVET EUROPEEN

(11) **EP 2 456 265 B1**
(45) Date de publication et mention de la délivrance du brevet: **17.07.2019**
(21) Numéro de dépôt: 11189729.4
(22) Date de dépôt: 18.11.2011
(51) Int. Cl.: H04W 52/02

(54) **Procédé de gestion du niveau de charge d'une batterie d'un terminal mobile, système de gestion et programme d'ordinateur correspondants**
Verfahren zur Verwaltung des Batterieladungszustands eines Mobilendgeräts, Verwaltungssystem und Rechnerprogramm dafür.
Method for managing the battery charge level of a mobile terminal, management system and computer program therefor.

(30) Priorité: 19.11.2010 FR 1059562
(43) Date de publication de la demande: 23.05.2012
(73) Titulaire: Airbus DS SAS, 78990 Elancourt (FR)
(72) Inventeur: Gromat, Hervé, 78390 Bois D'arcy (FR); Gruet, Christophe, 78990 Elancourt (FR); Mokrani, Hervé, 92330 Sceaux (FR); Perrin, Olivier, 27110 Saint-Aubin d'Ecrosville (FR)
(74) Mandataire: Cabinet Camus Lebkiri

(56) Documents cités:
- US-A1- 2006 087 993
- US-A1- 2007 121 536
- US-A1- 2008 058 000
- US-A1- 2008 188 177
- US-A1- 2008 192 666
- US-A1- 2009 325 622
- US-B1- 6 898 438

## Description

La présente invention concerne un procédé de gestion du niveau de charge d'une batterie d'un terminal mobile. Elle concerne également un système de gestion et un programme d'ordinateur correspondants.

L'invention se rapporte notamment au domaine des réseaux mobiles radioélectriques professionnels, plus connus sous l'acronyme anglais PMR (« Professional Mobile Radio »).

Il s'agit de réseaux de communication radioélectriques sécurisés, généralement utilisés par des organismes de Sécurité Publique tels que les pompiers, les forces de police, la gendarmerie et les militaires, ou bien par des entreprises ou des administrations.

Les utilisateurs de terminaux PMR les utilisent dans le cadre de missions extérieures souvent critiques. Dans ce cadre, le maintien de la charge de la batterie à un niveau suffisant pour pouvoir passer et recevoir des appels est un élément critique pour la durée de vie de la mission.

Par le passé, les réseaux PMR, pour reprendre cet exemple, ne permettaient de transmettre que la voix et de courts messages de données, de sorte que le risque d'une décharge complète de la batterie était limité. Actuellement, ces réseaux permettent également de transmettre en plus de la voix, de la vidéo et des données de type fichiers, messagerie électronique, pages web, etc. Or, ces services sont très consommateurs d'énergie, de sorte que le risque de décharge complète de la batterie au cours d'une mission est bien réel.

Le document WO2007/050687 décrit un procédé de gestion du niveau de charge d'une batterie d'un terminal mobile, dans lequel la fourniture d'un service au terminal est retardée suite à l'identification d'un faible niveau de charge de la batterie.

Ce procédé n'est cependant pas applicable au cas des réseaux PMR, étant donné qu'il n'est pas envisageable de reporter la fourniture d'un service, comme un appel téléphonique ou une transmission d'un message etc., à un terminal PMR dont l'utilisateur accomplit une mission critique, voire vitale dans certaines situations.

Le document US2008/192666 décrit un procédé de gestion du niveau de charge d'une batterie d'un premier terminal mobile raccordé à un réseau de transmission d'informations comprenant la sélection d'un deuxième terminal comme relais de connexion du premier terminal au réseau.

La présente invention vise à améliorer la situation.

A cet effet, la présente invention concerne tout d'abord un procédé de gestion du niveau de charge d'une batterie d'un terminal mobile raccordé à un réseau de transmission d'informations selon les revendications indépendantes 1 et 2.

L'invention concerne également un système de gestion du niveau de charge d'une batterie d'un terminal mobile selon les revendications indépendantes 6 et 7 pour la mise en oeuvre du procédé de l'invention.

L'invention concerne aussi un programme d'ordinateur selon la revendication 9 comportant des instructions pour la mise en oeuvre du procédé de l'invention lorsque le programme est exécuté par un processeur.

D'autres modes de réalisation avantageux de l'invention sont décrits dans les revendications dépendantes 3-5 et 8.

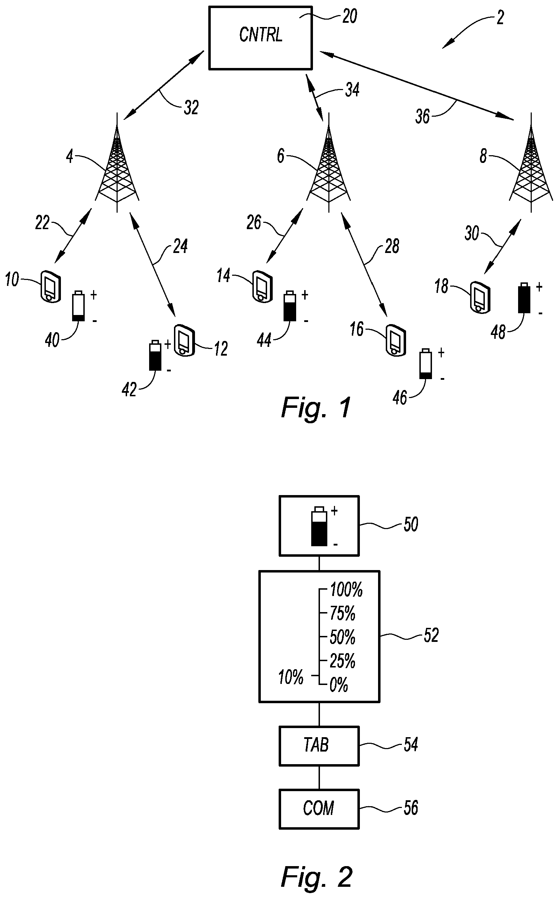

Les organigrammes des figures 2, 4 et 6 illustrent schématiquement le déroulement de ce programme d'ordinateur, pour différents modes de réalisation de l'invention.

Des modes de réalisation de l'invention vont maintenant être décrits de façon plus précise mais non limitative en regard des dessins annexés sur lesquels :
- la figure 1 est un schéma illustrant un exemple de réseau de transmission d'informations dans lequel l'invention peut être mise en oeuvre ;
- la figure 2 est un organigramme illustrant les étapes du procédé selon un premier mode de réalisation de l'invention ;
- la figure 3 est un schéma illustrant la mise en oeuvre d'un deuxième mode de réalisation de l'invention dans le réseau de la figure 1 ;
- la figure 4 est un organigramme illustrant les étapes du procédé selon le deuxième mode de réalisation de l'invention ;
- la figure 5 est un schéma illustrant la mise en oeuvre d'un troisième mode de réalisation de l'invention dans le réseau de la figure 1 ; et
- la figure 6 est un organigramme illustrant les étapes du procédé selon le troisième mode de réalisation de l'invention.

La figure 1 illustre un réseau 2 de transmission d'informations. Le réseau 2 est, de préférence, un réseau mobile professionnel PMR dans lequel sont déployées des stations de base 4, 6, 8 pour couvrir une zone géographique déterminée afin de permettre à des terminaux mobiles 10, 12, 14, 16, 18 d'accéder à un ensemble de services PMR. Ces services comprennent notamment la transmission de la voix, de la vidéo et de données. La transmission de données peut être une transmission de type fichiers, selon le protocole de transfert de fichiers FTP (« File Transfer Protocol ») par exemple, messagerie électronique, pages web, messages SMS, etc.

Les stations de base 4, 6, 8 sont raccordées à un équipement de contrôle 20 du réseau 2 permettant de commander leur fonctionnement.

L'équipement de contrôle 20 peut être situé au niveau d'un serveur dans un noeud quelconque du réseau 2 ou au niveau d'un poste de contrôle centralisé.

La présente invention n'est pas limitée quant à la largeur de bande du réseau 2 de sorte qu'elle s'applique aux réseaux à large bande et aux réseaux à bande étroite.

Selon l'architecture, à titre d'exemple, représentée sur la figure 1, les terminaux mobiles 10 et 12 sont raccordés au réseau 2 par l'intermédiaire de la station de base 4, les terminaux mobiles 14 et 16 sont raccordés au réseau 2 par l'intermédiaire de la station de base 6 et le terminal mobile 18 est raccordé au réseau 2 par l'intermédiaire de la station de base 8.

Chaque terminal mobile est raccordé à la station de base qui lui est associée par une liaison radioélectrique bi-directionnelle. Le terminal mobile transmet ainsi des informations à la station de base selon une liaison dite montante, ou « uplink » selon l'acronyme anglais symbolisé par UL. La station de base transmet des informations au terminal mobile selon une liaison dite descendante, ou « downlink » selon l'acronyme anglais symbolisé par DL.

Les liaisons de transmission d'informations entre les terminaux mobiles 10, 12, 14, 16,18 et les stations de base associées 4, 6, 8 sont représentées, sur le schéma de la figure 1, par des flèches bidirectionnelles 22, 24, 26, 28, 30, respectivement. Les transmissions d'informations sur les liaisons 22, 24, 26, 28, 30 peuvent être de différents types, par exemple des transmissions en mode circuit, en mode paquets, en mode direct, etc.

Les stations de base 4, 6, 8 sont également raccordées à l'équipement de contrôle 20 du réseau 2 selon des liaisons de transmission d'informations bidirectionnelles 32, 34, 36, respectivement. Les transmissions d'informations sur les liaisons 32, 34, 36 peuvent être de différents types, par exemple des transmissions en mode circuit, en mode paquets, en mode direct, etc.

Typiquement, dans le réseau PMR 2, deux types de services sont proposés aux terminaux mobiles 10, 12, 14, 16, 18.

Le premier type de services nécessite une diffusion selon la liaison descendante DL. Un support (selon l'acronyme anglais « bearer ») radioélectrique est utilisé par chaque station de base pour distribuer un flux de trafic descendant DL au groupe de terminaux qui lui sont raccordés. Le flux montant UL correspondant est géré individuellement par chaque terminal par l'allocation d'un support radioélectrique dédié. Ce premier type de services concerne généralement la transmission de la voix et de la vidéo descendante.

Le deuxième type de services ne nécessite pas de diffusion en liaison descendante DL de sorte qu'un support radioélectrique dédié est alloué à la fois à la liaison montante UL et à la liaison descendante DL. Ce deuxième type de services concerne principalement la transmission de données de type fichiers, Internet, courrier électronique, messages SMS, etc.

Chaque terminal mobile 10, 12, 14, 16, 18 dispose respectivement d'une batterie 40, 42, 44, 46, 48 pour la fourniture d'énergie électrique aux différents circuits électroniques constituant le terminal. Chaque batterie peut être amovible ou fixée en permanence sur le terminal et elle peut être de type rechargeable ou non.

Avantageusement, des moyens de mesure du niveau de charge de la batterie sont prévus afin de disposer de manière précise du niveau de charge restante de la batterie de chaque terminal.

De préférence, ces moyens de mesure sont prévus au niveau de chaque terminal.

Il est également possible de prévoir ces moyens de mesure au niveau des stations de base ou de l'équipement de contrôle du réseau.

Le niveau de charge de chaque batterie, mesuré in situ au niveau du terminal ou par télémesure au niveau de la station de base ou de l'équipement de contrôle du réseau, est représenté de manière conventionnelle sur la figure 1 par un trait plein séparant une zone pleine et une zone vide entre les bornes négative et positive de la batterie. Plus la zone vide est grande, plus le niveau de charge de la batterie est faible.

A titre d'exemple, il apparaît que le niveau de charge de la batterie 48 du terminal 18 est élevé, le niveau de charge des batteries 42 et 44 des terminaux 12 et 14 est moyen et le niveau de charge des batteries 40 et 46 des terminaux 10 et 16 est faible.

De préférence, le niveau de charge de la batterie est affiché sur des moyens d'affichage, de type écran, du terminal de sorte que l'utilisateur du terminal est averti d'une baisse du niveau de charge de la batterie.

L'invention s'applique avantageusement dans les réseaux PMR, lorsqu'un ou plusieurs utilisateurs munis de leurs terminaux mobiles partent en mission sur le terrain pour une durée indéterminée. Ces utilisateurs n'ont généralement pas de moyen de recharger la batterie du terminal en cours de mission ni ne disposent d'une batterie de remplacement de sorte qu'il est capital pour eux de prolonger au maximum la durée de vie de la batterie. L'invention propose également d'utiliser le niveau de charge mesuré de la batterie pour optimiser sa durée de vie.

Nous supposons dans la suite de la description que cinq utilisateurs munis respectivement des terminaux 10, 12, 14, 16, 18 sont en mission. L'invention s'applique également aux cas où un nombre moindre ou supérieur d'utilisateurs est en mission. L'organigramme de la figure 2 représente les étapes du procédé de gestion du niveau de charge de la batterie selon un premier mode de réalisation.

Les niveaux de charge des batteries 40, 42, 44, 46, 48 sont mesurés, à l'étape 50, de préférence périodiquement, par les moyens de mesure, prévus de préférence respectivement au niveau des terminaux 10, 12, 14, 16, 18. Les valeurs mesurées, éventuellement moyennées sur une période donnée, sont ensuite transmises au réseau 2, par l'intermédiaire des stations de base 4, 6, 8, sur demande ou périodiquement. La période de transmission des valeurs mesurées peut être différente de la période de mesure.

Selon le premier mode de réalisation de l'invention, plusieurs intervalles de niveau de charge de la batterie sont définis à l'étape 52, par exemple en termes de pourcentage du niveau de charge maximum de la batterie.

A titre d'exemple, il s'agit des intervalles [0,10%], [10%,25%], [25%,50%], [50%,75%] et [75%,100%].

Avantageusement, à l'étape 54, une règle de fonctionnement du terminal est allouée à chaque intervalle de niveau de charge de la batterie.

On peut prévoir d'allouer cette règle de fonctionnement par exemple lors d'une configuration du terminal ou bien en la téléchargeant à partir d'un noeud du réseau.

De préférence, une table comprenant les intervalles de niveau de charge définis à l'étape 52 et les règles de fonctionnement correspondantes est stockée au niveau de chaque terminal et/ou au niveau de chaque station de base et/ou au niveau de l'équipement de contrôle du réseau.

Les étapes 52 et 54 sont des étapes préalables du procédé, c'est à dire que la table associant les règles de fonctionnement aux intervalles de niveau de charge est fournie au préalable, avant la mission. Cette table est, de préférence, la même pour des terminaux utilisant les mêmes types de batteries. Nous supposons que la table est identique pour les terminaux 10, 12, 14, 16 et 18.

Avantageusement, les règles de fonctionnement associées à un niveau de charge inférieur à un seuil donné sont choisies parmi une restriction d'un débit alloué à une opération de transmission d'informations ultérieure du terminal ou une interdiction d'une telle opération.

La table 1 est un exemple d'une table associant des règles de fonctionnement à des intervalles de niveau de charge.

Cette table 1 est d'abord fondée sur le fait qu'une émission consomme plus d'énergie qu'une réception de sorte que les débits alloués aux opérations d'émission en liaison montante UL sont plus restreints que ceux alloués au opérations de réception en liaison descendante DL.

En outre, la table 1 est également fondée sur le fait que les différents services consomment plus ou moins d'énergie selon leurs caractéristiques en termes de débit binaire (exprimé en kilobits par seconde kbps), de contraintes de temps réel ou pas, de niveau de fiabilité, etc.

Un autre critère d'établissement de la table 1 est le niveau de priorité des différents services. Ainsi, les appels d'urgence devraient être autorisés même lorsque le niveau de charge de la batterie est extrêmement faible.

**Table 1**

| Niveau de charge | Voix | Vidéo | Données (ftp,courriel, web, SMS) |
|---|---|---|---|
| 76% - 100% | DL: autorisé | DL: autorisé | DL: autorisé |
| | UL: autorisé | UL: autorisé | UL: autorisé |
| 51% - 75% | DL: autorisé | DL: autorisé | DL: autorisé |
| | UL: autorisé | UL: autorisé avec une restriction de débit (jusqu'à 384 kbps) | UL: autorisé avec une restriction de débit (jusqu'à 384 kbps) |
| 26 % - 50% | DL: autorisé | DL: autorisé avec une | DL: autorisé avec une |
| | UL: autorisé mais limité à un ensemble réduit des appels vocaux disponibles | restriction de débit (jusqu'à 512 kbps) | restriction de débit (jusqu'à 512 kbps) |
| | | UL: autorisé avec une restriction de débit (jusqu'à 128 kbps) | UL: autorisé avec une restriction de débit (jusqu'à 256 kbps) |
| 11%-25% | DL: autorisé mais limité à un ensemble réduit des appels vocaux disponibles | DL: autorisé avec une restriction de débit (jusqu'à 384 kbps) | DL: autorisé avec une restriction de débit (jusqu'à 384 kbps) |
| | | UL: autorisé avec une restriction de débit (jusqu'à 64 kbps) | UL: autorisé avec une restriction de débit (jusqu'à 128 kbps) |
| | UL: autorisé mais limité aux appels vocaux d'urgence | | |
| 1%-10% | DL: autorisé mais limité aux appels vocaux d'urgence | DL: autorisé avec une restriction de débit (jusqu'à 128 kbps) | DL: autorisé avec une restriction de débit (jusqu'à 128 kbps) |
| | UL: autorisé mais limité aux appels vocaux d'urgence | UL: non autorisé | UL: autorisé avec une restriction de débit (jusqu'à 64 kbps) |

A l'étape 56, le fonctionnement de chacun des terminaux est commandé selon la règle de fonctionnement allouée à l'intervalle auquel appartient le niveau de charge mesuré de la batterie.

Ainsi, la batterie 48 ayant un niveau de charge de 100%, le terminal 18 peut continuer à émettre et recevoir des appels de voix, de vidéo et de données sans restriction.

Les batteries 42 et 44 ayant, par hypothèse, un niveau de charge compris entre 51% et 75 %, les terminaux 12 et 14 peuvent continuer à recevoir des communications de tout type mais ne peuvent émettre que des appels vocaux ou de la vidéo et des données avec un débit restreint à 384 kbps.

Les batteries 40 et 46 ayant, par hypothèse, un niveau de charge inférieur à 10%, les terminaux 10 et 16 peuvent recevoir uniquement des appels vocaux d'urgence ou de la vidéo et des données avec un débit inférieur à 128 kbps et ne peuvent plus émettre que des appels vocaux d'urgence ou des données avec un débit inférieur à 64 kbps.

Ainsi, le premier mode de réalisation permet avantageusement de réduire le niveau de service autorisé pour chaque terminal proportionnellement à son niveau de batterie.

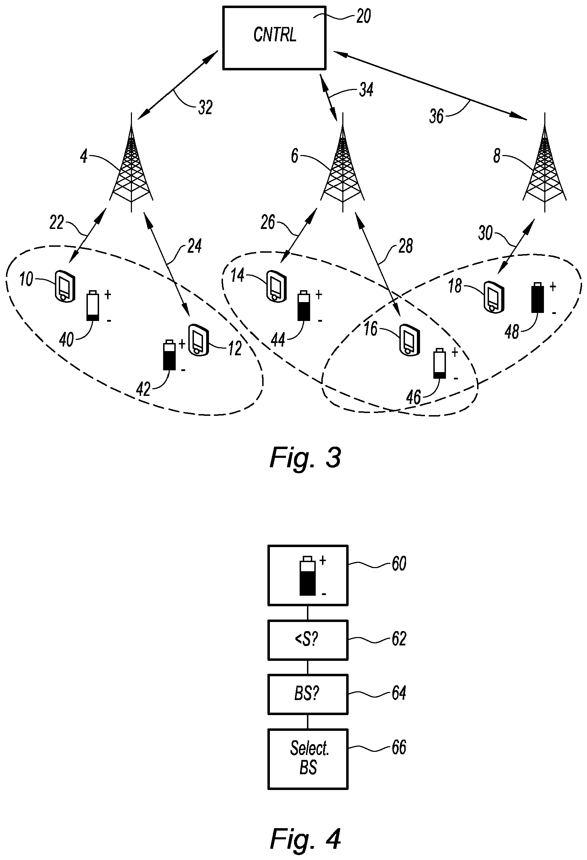

La figure 3 illustre un deuxième mode de réalisation du procédé de l'invention.

Selon ce deuxième mode de réalisation, lorsque le niveau de charge de batterie du terminal devient inférieur à un seuil déterminé, une autre station de base est sélectionnée en remplacement de la station de base associée au terminal pour raccorder ce dernier au réseau afin de minimiser la consommation d'énergie du terminal lors d'une opération de transmission d'informations ultérieure.

Selon l'exemple illustré sur la figure 3, la batterie 46 ayant un niveau de charge faible, par exemple inférieur à un seuil prédéfini, le terminal 16 sélectionne la station de base 8 en remplacement de la station de base 6, l'accès au réseau par l'intermédiaire de cette station de base 8, par exemple plus proche du terminal 16, étant plus avantageux en termes de consommation d'énergie.

Bien entendu, cette sélection peut être autonome au niveau du terminal 16 ou bien peut être commandée par l'équipement de contrôle 20 du réseau 2 ou encore par la station de

Les étapes du procédé, selon ce deuxième mode de réalisation, sont illustrées par l'organigramme de la figure 4.

A l'étape 60, le niveau de charge de batterie est mesuré, de préférence périodiquement de la même manière que lors de l'étape 50 du premier mode de réalisation.

A l'étape 62, le niveau de charge mesuré est comparé à un seuil de niveau de charge prédéfini.

Si le niveau de charge mesuré est inférieur au seuil prédéfini, le terminal effectue, à l'étape 64, une recherche d'au moins une station de base à laquelle il est susceptible de se raccorder pour optimiser sa consommation d'énergie lors de ses communications avec le réseau 2.

A l'étape 64, le terminal sélectionne la station de base lui permettant d'optimiser sa consommation d'énergie.

La nouvelle station de base sélectionnée est, par exemple, plus proche du terminal que la station de base initiale qui lui est associée, de sorte que le terminal consomme moins de charge de batterie lors d'une opération de transmission d'informations ultérieure en se raccordant à cette nouvelle station de base.

Dans le cas de l'exemple de la figure 3, les batteries 42, 44 et 48 ont un niveau de charge supérieur au seuil prédéfini, égal à 25% par exemple. Ainsi, aucune recherche de nouvelle station de base n'est menée par les terminaux 12, 14 et 18.

La batterie 40 a un niveau de charge inférieur au seuil prédéfini de sorte que le terminal 10 effectue la recherche de l'étape 64. Cependant, ce terminal 10 ne trouve pas de station de base permettant un accès plus avantageux que la station de base 4 en termes de consommation d'énergie. Le terminal 10 ne sélectionne donc pas de nouvelle station de base pour se raccorder au réseau 2.

La batterie 46 a un niveau de charge inférieur au seuil prédéfini de sorte que le terminal 16 effectue la recherche de l'étape 64. Le terminal 16 trouve que la station de base 8 offre un accès plus avantageux que la station de base 6 en termes de consommation d'énergie. Le terminal 16 sélectionne donc, à l'étape 66, la station de base 8 en remplacement de la station de base 6, pour se raccorder au réseau 2.

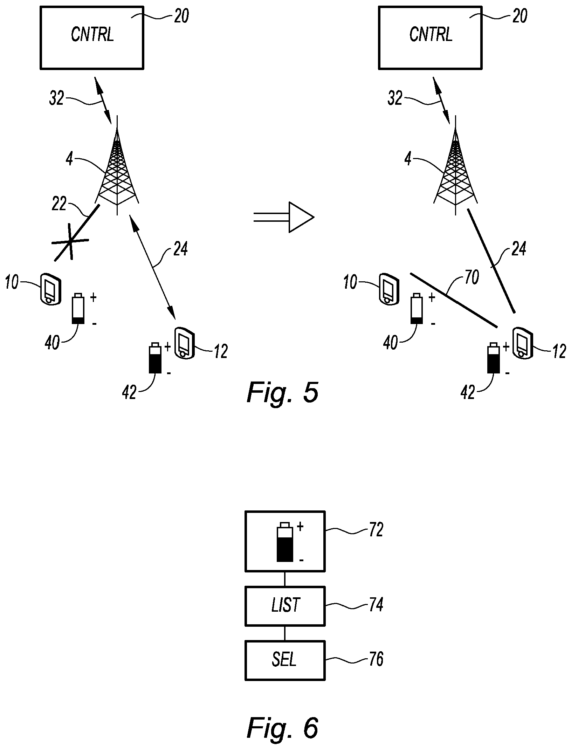

La figure 5 illustre un troisième mode de réalisation de l'invention.

Selon ce troisième mode de réalisation, lorsque le niveau de charge de batterie d'un premier terminal devient inférieur à un seuil déterminé, un deuxième terminal, ayant un niveau de charge de la batterie supérieur à ce seuil, est sélectionné comme relais de connexion du premier terminal pour raccorder ce dernier au réseau afin de minimiser la consommation d'énergie du premier terminal lors d'une opération de transmission d'informations ultérieure.

Selon l'exemple illustré sur la figure 5, la batterie 40 ayant un niveau de charge faible et la batterie 42 ayant un niveau de charge élevé, le terminal 10 sélectionne le terminal 12, de la manière décrite dans la suite de la description en référence à la figure 6, comme relais de connexion vers le réseau 2. Ainsi, le terminal 10, n'est plus raccordé à la station de base 4 à travers la liaison 22, mais par l'intermédiaire du terminal 12 à travers une liaison de transmission d'informations 70.

Ce mode de réalisation préféré de l'invention s'applique avantageusement à un réseau PMR dans lequel les terminaux accèdent au réseau à l'aide d'une technologie d'accès générale de type WMAN et offrent localement une technologie d'accès de proximité, de type WLAN/WPAN, par exemple Wi-Fi et/ou Bluetooth et/ou PMR en mode direct dit PMR DMO (« Direct Mode »). Dans un tel réseau, tous les terminaux peuvent fonctionner en tant que relais de proximité WLAN pour tous les terminaux connectés selon un accès personnel WPAN.

Ce mode de réalisation préféré de l'invention permet ainsi d'autoriser des terminaux ayant un faible niveau de charge de batterie, tel le terminal 10, à préférer un accès WPAN, tel l'accès 70, pour se raccorder à un terminal proche, tel le terminal 12, ayant un niveau de batterie plus élevé.

L'organigramme de la figure 6 illustre les étapes du procédé de gestion de la batterie selon le troisième mode de réalisation de l'invention.

A l'étape 72, les niveaux de charge de batterie des terminaux raccordés au réseau 2 et présents dans une zone géographique donnée sont mesurés et fournis à l'équipement de contrôle 20 du réseau 2. Cette mesure, de préférence périodique, est effectuée soit in situ par les moyens de mesure du niveau de charge de batterie de chaque terminal puis transmises à l'équipement de contrôle 20 du réseau 2, soit par télémesure au niveau des stations de base puis transmises à l'équipement de contrôle 20 ou directement par télémesure au niveau de l'équipement de contrôle 20.

Avantageusement, les terminaux réalisent ces mesures sur des porteuses de canal de diffusion BCCH (« Broadcast Control Channel ») en mesurant les niveaux de réception BCCH.

Dans une réalisation, les mesures concernent tous les terminaux raccordés au réseau présents dans la zone géographique. La localisation géographique des terminaux est connue de l'équipement de contrôle 20 grâce à des procédés conventionnels de type GPS ou OTDOA, par exemple.

Dans une variante préférée, les mesures concernent uniquement un groupe de terminaux raccordés au réseau, ce groupe étant prédéfini, ou défini à partir d'informations transmises par un noeud du réseau tel que le poste de contrôle, et correspondant, par exemple, aux terminaux d'un groupe d'utilisateurs partis dans une même mission.

Ainsi à l'issue de l'étape 72, l'équipement de contrôle 20 dispose des niveaux de charge des batteries de tous les terminaux du groupe raccordés au réseau.

A l'étape 74, l'équipement de contrôle 20 transmet aux terminaux ayant un faible niveau de charge, c'est-à-dire un niveau de charge inférieur à un seuil de niveau de charge prédéfini, une liste de terminaux ayant un niveau de charge de batterie plus élevé et auxquels il serait intéressant de se raccorder avec un accès personnel WPAN pour économiser la charge de batterie.

Avantageusement, cette liste comprend les terminaux ayant le même type de mesures BCCH, à une marge près, que le terminal à faible niveau de batterie pour lequel elle est établie.

Avantageusement, l'équipement de contrôle 20 attribue des niveaux de priorité aux terminaux de cette liste selon les capacités de chaque terminal. Par exemple, si le terminal 10 est monté dans un véhicule, les terminaux portatifs sont évités car ils offrent un panel de services plus faible que le terminal 10. En effet, les terminaux montés dans les véhicules permettent, par exemple, de contrôler depuis la cabine du véhicule différents équipements radio alors que les terminaux portatifs ne permettent pas un tel contrôle en raison de leur plus faible capacité.

En variante, la liste de terminaux n'est pas établie par l'équipement de contrôle du réseau mais par le terminal 10 qui effectue un balayage de type WPAN pour trouver les terminaux mobiles, connectés au même réseau WPAN, les plus proches.

Bien entendu, la liste peut être également établie au niveau de la station de base 4.

A la réception de la liste, le terminal 10 sélectionne, à l'étape 76, un terminal dans la liste comme relais de connexion au réseau 2.

Selon l'exemple de la figure 5, le terminal 10 sélectionne le terminal le plus proche de lui, c'est-à-dire le terminal 12 dans l'exemple.

Le terminal 10 communique alors avec le réseau 2 selon un protocole défini de manière conventionnelle. A titre d'exemple, une signalisation WPAN point à point est établie entre les terminaux 10 et 12 pour la transmission d'informations du terminal 10 vers le terminal 12 pour la liaison montante UL, du terminal 10 vers la station de base 4, et du terminal 12 vers le terminal 10 pour la liaison descendante DL, de la station de base 4 vers le terminal 10.

Evidemment, cette stratégie peut être étendue à un nombre de terminaux supérieur à deux.

Une stratégie collective peut également être mise en oeuvre visant à optimiser le niveau de charge de batterie global de toutes les batteries du groupe.

Dans ce cas, la sélection est faite pour équilibrer les niveaux de charge des batteries de tous les terminaux du groupe. Un tel équilibrage tend par exemple à faire en sorte que tous les terminaux du groupe ont un même niveau de charge au bout d'un temps prédéterminé.

En variante, certains terminaux étant considérés comme plus importants, correspondant par exemple à des postes plus sensibles dans le cadre de la mission, un niveau de charge relatif de la batterie est attribué à chaque terminal du groupe.

On peut prévoir d'attribuer le niveau de charge relatif à chaque terminal en le configurant ou bien en acquérant ce niveau de charge relatif depuis l'équipement de contrôle, par exemple.

La sélection est alors effectuée en maintenant le niveau de charge relatif de chaque terminal du groupe.

Avantageusement, on peut prévoir qu'en cas d'échec d'une transmission de données depuis un premier terminal vers un deuxième terminal ayant un faible niveau de batterie, par exemple inférieur à un niveau de charge prédéfini, l'équipement de contrôle du réseau envoie une notification au premier terminal lui indiquant que le niveau de charge de batterie du deuxième terminal est faible.

Cela peut être réalisé grâce à la transmission régulière par les stations de base déployées dans le réseau vers l'équipement de contrôle d'une liste d'identifiants de terminaux ayant un niveau de batterie faible.

Avantageusement, chaque terminal transmet périodiquement le niveau de charge mesuré de la batterie vers la station de base qui lui est associée. La périodicité de cette transmission peut être avantageusement choisie en fonction de ce niveau de charge afin d'économiser la charge de la batterie. Ainsi, la périodicité de cette transmission peut être choisie plus longue lorsque le niveau de charge de batterie du terminal est faible et plus courte dans le cas contraire.

Bien entendu, d'autres modes de réalisation peuvent encore être envisagés. Par exemple, la mise à jour régulière par l'équipement de contrôle de la liste des terminaux ayant un niveau de batterie faible peut être utilisée pour déclencher l'étape de commande du fonctionnement de ces terminaux selon l'une quelconque des stratégies développées en référence aux figures 1 à 6 pour limiter l'accès du terminal à certains services du réseau ou pour lui offrir un service réduit ou bien pour modifier le chemin d'accès du terminal au réseau.

En outre, les différents modes de réalisation décrits peuvent être avantageusement combinés.

Ainsi, on peut envisager d'allouer à un intervalle de niveau de charge défini à l'étape 52 du premier mode de réalisation une règle de fonctionnement déclenchant la sélection d'une nouvelle station de base ou d'un nouveau terminal mobile comme relais de connexion du terminal au réseau.

## Revendications

1. Procédé de gestion du niveau de charge d'une batterie (40) d'un premier terminal mobile (10) raccordé à un réseau (2) de transmission d'informations, comprenant :
- une étape de mesure (72) du niveau de charge de la batterie (40) ; et
- une étape de commande du fonctionnement du premier terminal (10) réduisant sa consommation d'énergie lors d'une opération de transmission d'informations depuis ou vers le premier terminal (10), lorsque le niveau de charge de la batterie (40) est inférieur à un seuil de niveau de charge prédéfini,
ladite étape de commande comprenant des sous-étapes de :
- sélection d'une liaison d'accès, du premier terminal (10) au réseau (2), optimale en termes de consommation d'énergie ; et
- connexion du premier terminal (10) au réseau (2) à travers la liaison d'accès sélectionnée,
dans lequel, au moins un deuxième terminal (12) étant raccordé au réseau (2), la sous-étape de sélection d'une liaison d'accès du premier terminal (10) au réseau (2) comprend la sélection (76) du deuxième terminal (12) comme relais de connexion du premier terminal (10) au réseau (2),
la sélection du deuxième terminal (12) comprenant des étapes de:
- mesure (72) des niveaux de charge des batteries d'un groupe de terminaux raccordés au réseau (2) dans une zone géographique déterminée autour du premier terminal (10) ; et
- sélection (76) d'un terminal du groupe comme étant le deuxième terminal (12) comme étant le terminal le plus proche du premier terminal (10) et ayant un niveau de charge de batterie suffisant pour réaliser l'opération de transmission d'informations.

2. Procédé de gestion du niveau de charge d'une batterie (40) d'un premier terminal mobile (10) raccordé à un réseau (2) de transmission d'informations, comprenant :
- une étape de mesure (72) du niveau de charge de la batterie (40) ; et
- une étape de commande du fonctionnement du premier terminal (10) réduisant sa consommation d'énergie lors d'une opération de transmission d'informations depuis ou vers le premier terminal (10), lorsque le niveau de charge de la batterie (40) est inférieur à un seuil de niveau de charge prédéfini,
ladite étape de commande comprenant des sous-étapes de :
- sélection d'une liaison d'accès, du premier terminal (10) au réseau (2), optimale en termes de consommation d'énergie ; et
- connexion du premier terminal (10) au réseau (2) à travers la liaison d'accès sélectionnée,
dans lequel, au moins un deuxième terminal (12) étant raccordé au réseau (2), la sous-étape de sélection d'une liaison d'accès du premier terminal (10) au réseau (2) comprend la sélection (76) du deuxième terminal (12) comme relais de connexion du premier terminal (10) au réseau (2),
la sélection du deuxième terminal (12) comprenant des étapes de :
- attribution d'un niveau de charge relatif de la batterie à chaque terminal d'un groupe de terminaux raccordés au réseau dans une zone géographique déterminée autour du premier terminal, ledit niveau de charge relatif correspondant à un niveau d'importance du terminal prédéfini ;
- mesure (72) des niveaux de charge des batteries des terminaux du groupe ; et
- sélection (76) d'un terminal du groupe comme étant le deuxième terminal (12) pour assurer que le niveau de charge de la batterie de chaque terminal du groupe respecte le niveau de charge relatif qui lui est attribué.

3. Procédé selon l'une quelconque des revendications 1 ou 2, dans lequel l'étape de commande comprend des sous-étapes de :
- définition (52) d'une pluralité d'intervalles de niveaux de charge de la batterie (40) ;
- allocation (54) d'une règle de fonctionnement du premier terminal (10) à chaque intervalle de niveau de charge de la batterie (40) ; et
- commande (56) de fonctionnement du premier terminal (10) selon la règle allouée à l'intervalle auquel appartient le niveau de charge mesuré de la batterie (40).

4. Procédé selon la revendication 3, comprenant en outre une étape de stockage d'une table comprenant les intervalles de niveaux de charge et les règles de fonctionnement correspondant au niveau du premier terminal (10) et/ou du réseau (2).

5. Procédé selon la revendication 3 ou 4, dans lequel les règles de fonctionnement sont choisies parmi :
- une restriction d'un débit alloué à l'opération de transmission d'informations ; ou
- une interdiction de l'opération de transmission d'informations.

6. Système de gestion du niveau de charge d'une batterie (40) d'un premier terminal mobile (10) pour la mise en oeuvre du procédé selon la revendication 1, comprenant des moyens de commande (20) du fonctionnement du premier terminal (10), agencés pour commander un accès du premier terminal (10) à au moins un service du réseau (2) en fonction du niveau de charge de la batterie (40),
dans lequel, au moins un deuxième terminal (12) étant raccordé au réseau (2), les moyens de commande comprennent des moyens de :
- mesure des niveaux de charge des batteries d'un groupe de terminaux raccordés au réseau (2) dans une zone géographique déterminée autour du premier terminal (10) ;
- sélection du deuxième terminal (12), comme relais de connexion du premier terminal (10) au réseau (2), comme étant le terminal le plus proche du premier terminal (10) et ayant un niveau de charge de batterie suffisant pour réaliser l'opération de transmission d'informations ; et
- connexion du premier terminal (10) au réseau (2) par l'intermédiaire du deuxième terminal (12).

7. Système de gestion du niveau de charge d'une batterie (40) d'un premier terminal mobile (10) pour la mise en oeuvre du procédé selon la revendication 2, comprenant des moyens de commande (20) du fonctionnement du premier terminal (10), agencés pour commander un accès du premier terminal (10) à au moins un service du réseau (2) en fonction du niveau de charge de la batterie (40),
dans lequel, au moins un deuxième terminal (12) étant raccordé au réseau (2), les moyens de commande comprennent des moyens de :
- attribution d'un niveau de charge relatif de la batterie à chaque terminal d'un groupe de terminaux raccordés au réseau dans une zone géographique déterminée autour du premier terminal, ledit niveau de charge relatif correspondant à un niveau d'importance du terminal prédéfini ;
- mesure des niveaux de charge des batteries des terminaux du groupe ;
- sélection d'un terminal du groupe comme étant le deuxième terminal (12), comme relais de connexion du premier terminal (10) au réseau (2), pour assurer que le niveau de charge de la batterie de chaque terminal du groupe respecte le niveau de charge relatif qui lui est attribué; et
- connexion du premier terminal (10) au réseau (2) par l'intermédiaire du deuxième terminal (12).

8. Système de gestion du niveau de charge d'une batterie (40) d'un premier terminal selon l'une des revendications 6 ou 7, dans lequel, au moins un deuxième terminal (12) étant raccordé au réseau (2), les moyens de commande comprennent des moyens de :
- définition d'une pluralité d'intervalles de niveaux de charge de la batterie (40) ;
- allocation d'une règle de fonctionnement du premier terminal (10) à chaque intervalle de niveau de charge de la batterie (40) ; et
- commande de fonctionnement du premier terminal (10) selon la règle allouée à l'intervalle auquel appartient le niveau de charge mesuré de la batterie (40).

9. Programme d'ordinateur comportant des instructions pour la mise en oeuvre du procédé selon l'une quelconque des revendications 1 à 5 lorsque le programme est exécuté par un processeur.

## Patentansprüche

1. Managementverfahren des Ladeniveaus einer Batterie (40) eines ersten mobilen Terminals (10), das an ein Netz (2) zur Übertragung von Informationen angeschlossen ist, umfassend:
- einen Messschritt (72) des Ladeniveaus der Batterie (40); und
- einen Steuerschritt des Betriebs des ersten Terminals (10), der seinen Energieverbrauch bei einer Übertragungsoperation von Informationen von oder zu dem ersten Terminal (10) senkt, wenn das Ladeniveau der Batterie (40) niedriger ist als ein vordefinierter Schwellenwert des Ladeniveaus,
wobei der genannte Schritt Teilschritte umfasst:
- der Auswahl einer Zugangsverbindung vom ersten Terminal (10) zum Netz (2), die in Bezug auf den Energieverbrauch optimal ist; und
- des Anschlusses des ersten Terminals (10) an das Netz (2) mittels der ausgewählten Zugangsverbindung,
bei dem wenigstens ein zweites Terminal (12) an das Netz (2) angeschlossen ist, der Unter-Auswahlschritt einer Zugangsverbindung vom ersten Terminal (10) zum Netz (2) die Auswahl (76) des zweiten Terminals (12) als Anschlussrelais des ersten Terminals (10) an das Netz (2) umfasst,
wobei die Auswahl des zweiten Terminals (12) Schritte umfasst:
- die Messung (72) der Ladeniveaus der Batterien einer Gruppe von Terminals, die an das Netz (2) in einem bestimmten geographischen Bereich um das erste Terminal (10) angeschlossen sind; und
- die Auswahl (76) eines Terminals der Gruppe als das zweite Terminal (12) als das Terminal, das dem ersten Terminal (10) am nächsten ist und ein ausreichendes Ladeniveau der Batterie aufweist, um die Übertragungsoperation von Informationen zu realisieren.

2. Managementverfahren des Ladeniveaus einer Batterie (40) eines ersten mobilen Terminals (10), das an ein Übertragungsnetz (2) von Informationen angeschlossen ist, umfassend:
- einen Messschritt (72) des Ladeniveaus der Batterie (40); und
- einen Steuerschritt des Betriebs des ersten Terminals (10), der seinen Energieverbrauch bei einer Übertragungsoperation von Informationen von oder zum ersten Terminal (10) senkt, wenn das Ladeniveau der Batterie (40) niedriger ist als ein vordefinierter Schwellenwert des Ladeniveaus,
wobei der genannte Steuerschritt die Teilschritte umfasst:
- Auswahl einer Zugangsverbindung vom ersten Terminal (10) zum Netz (2), die in Bezug auf den Energieverbrauch optimal ist; und
- Anschluss des ersten Terminals (10) an das Netz (2) durch die ausgewählte Zugangsverbindung,
bei dem wenigstens ein zweites Terminal (12) an das Netz (2) angeschlossen ist, der Teilschritt der Auswahl einer Zugangsverbindung des ersten Terminals (10) zum Netz (2) die Auswahl (76) des zweiten Terminals (12) als Anschlussrelais des ersten Terminals (10) zum Netz (2) umfasst,
wobei die Auswahl des zweiten Terminals (12) die Schritte umfasst:
- Zuordnung eines relativen Ladeniveaus der Batterie zu jedem Terminal einer Gruppe von Terminals, die an das Netz in einem bestimmten geographischen Bereich um das erste Terminal angeschlossen sind, wobei das genannte relative Ladeniveau einem Bedeutungsniveau des vorbestimmten Terminals entspricht;
- Messung (72) der Ladeniveaus der Batterien der Terminals der Gruppe; und
- Auswahl (76) eines Terminals der Gruppe als das zweite Terminal (12), um zu gewährleisten, dass das Ladeniveau der Batterie jedes Terminals der Gruppe das relative Ladeniveau einhält, das ihm zugeordnet ist.

3. Verfahren gemäß irgendeinem der Ansprüche 1 oder 2, bei dem der Steuerschritt Teilschritte umfasst:
- der Definition (52) einer Vielzahl von Intervallen von Ladeniveaus der Batterie (40);
- der Zuteilung (54) einer Betriebsregel des ersten Terminals (10) zu jedem Intervall des Ladeniveaus der Batterie (40); und
- der Steuerung (56) des Betriebs des ersten Terminals (10) gemäß der dem Intervall zugeordneten Regel, zu dem das gemessene Ladeniveau der Batterie (40) gehört).

4. Verfahren gemäß Anspruch 3, umfassend darüber hinaus einen Speicherschritt einer Tabelle, umfassend die Intervalle des Ladeniveaus und die Betriebsregeln, die dem Niveau des ersten Terminals (10) und / oder dem Netz (2) entsprechen.

5. Verfahren gemäß Anspruch 3 oder 4, bei dem die Betriebsregeln ausgewählt sind aus:
- einer Einschränkung eines Durchsatzes, der der Übertragungsoperation von Informationen zugeteilt ist; oder
- einem Verbot der Übertragungsoperation von Informationen.

6. Managementsystem des Ladeniveaus einer Batterie (40) eines ersten mobilen Terminals (10) für die Umsetzung des Verfahrens gemäß Anspruch 1, umfassend Steuermittel (20) des Betriebs des ersten Terminals (10), die angeordnet sind, um einen Zugang des ersten Terminals (10) zu wenigstens einem Dienst des Netzes (2) in Abhängigkeit von dem Ladeniveau der Batterie (40) zu steuern,
bei dem wenigstens ein zweites Terminal (12) an das Netz (2) angeschlossen ist, die Steuermittel Mittel umfassen:
- der Messung der Ladeniveaus der Batterien einer Gruppe von Terminals, die an das Netz (2) in einem bestimmten geographischen Bereich um das erste Terminal (10) angeschlossen sind;
- der Auswahl des zweiten Terminals (12) als Anschlussrelais des ersten Terminals (10) an das Netz (2) als das Terminal, das dem ersten Terminal (10) am nächsten ist und ein ausreichendes Ladeniveau der Batterie aufweist, um die Übertragungsoperation von Informationen zu realisieren; und
- des Anschlusses des ersten Terminals (10) an das Netz (2) durch das zweite Terminal (12).

7. Managementsystem des Ladeniveaus einer Batterie (40) eines ersten mobilen Terminals (10) für die Umsetzung des Verfahrens gemäß Anspruch 2, umfassend Steuermittel (20) des Betriebs des ersten Terminals (10), die angeordnet sind, um einen Zugang vom ersten Terminal (10) zu wenigstens einem Dienst des Netzes (2) in Abhängigkeit von dem Ladeniveau der Batterie (40) zu steuern,
bei dem wenigstens ein zweites Terminal (12) an das Netz (2) angeschlossen ist, wobei die Steuermittel Mittel umfassen:
- der Zuordnung eines Ladeniveaus bezüglich der Batterie zu jedem Terminal einer Gruppe von Terminals, die an das Netz in einem bestimmten geographischen Bereich um das erste Terminal angeschlossen sind, wobei das genannte relative Ladeniveau einem Bedeutungsniveau des vorbestimmten Terminals entspricht;
- der Messung (72) der Ladeniveaus der Batterien der Terminals der Gruppe; und
- der Auswahl (76) eines Terminals der Gruppe als das zweite Terminal (12), als Anschlussrelais des ersten Terminals (10) zum Relais (2), um zu gewährleisten, dass das Ladeniveau der Batterie jedes Terminals der Gruppe das relative Ladeniveau einhält, das ihm zugeordnet ist; und
- des Anschlusses des ersten Terminals (10) an das Netz (2) durch das zweite Terminal (12).

8. Managementsystem des Ladeniveaus einer Batterie (40) eines ersten Terminals gemäß einem der Ansprüche 6 oder 7, bei dem wenigstens ein zweites Terminal (12) an das Netz (2) angeschlossen ist, die Steuermittel Mittel umfassen:
- der Definition einer Vielzahl von Intervallen von Ladeniveaus der Batterie (40);
- der Zuteilung einer Betriebsregel des ersten Terminals (10) zu jedem Intervall des Ladeniveaus der Batterie (40); und
- der Steuerung des Betriebs des ersten Terminals (10) gemäß der dem Intervall zugeteilten Regel, zu dem das gemessene Ladeniveau der Batterie (40) gehört.

9. Computerprogramm, umfassend Anweisungen für die Umsetzung des Verfahrens gemäß irgendeinem der Ansprüche 1 bis 5, wenn das Programm durch einen Prozessor ausgeführt ist.

## Claims

1. A method for managing the charge level of a battery (40) of a first mobile terminal (10) connected to a network (2) of transmission of information, comprising:
- a step of measurement (72) of the charge level of the battery (40); and
- a step of control of the operation of the first terminal (10) reducing its power consumption during an operation of transmission of information from or toward the first terminal (10), when the charge level of the battery (40) is lower than a predefined threshold of charge level,
said step of control comprising the sub-steps of:
- selecting an access link, from the first terminal (10) to the network (2), being optimum in terms of power consumption; and
- connecting the first terminal to the network thru the selected access link,
wherein, at least one second terminal (12) being connected to the network (2), the sub-step of selection (76) of an access link of the first terminal to the network comprises the selection (76) of the second terminal (12) as a connection relay of the first terminal (10) to the network (2),
the selection of the second terminal (12) comprising steps of:
- measuring (72) the charge levels of the batteries of a group of terminals connected to the network (2) in a determined geographical area around the first terminal (10); and
- selecting (76) a terminal of the group as being the second terminal (12) as being the closest terminal to the first terminal (10) and having a battery charge level being sufficient for carrying out the operation of transmission of information.

2. A method for managing the charge level of a battery (40) of a first mobile terminal (10) connected to a network (2) of transmission of information, comprising:
- a step of measurement (72) of the charge level of the battery (40); and
- a step of control of the operation of the first terminal (10) reducing its power consumption upon an operation of transmission of information from or toward the first terminal (10), when the charge level of the battery (40) is lower than a predefined threshold of charge level,
said step of control comprising sub-steps of:
- selecting an access link, from the first terminal (10) to the network (2), being optimum in terms of power consumption; and
- connecting the first terminal (10) to the network (2) thru the selected access link,
wherein, at least one second terminal (12) being connected to the network (2), the sub-step of selection of an access link of the first terminal (10) to the network (2) comprises the selection (76) of the second terminal (12) as a connection relay of the first terminal (10) to the network (2),
the selection of the second terminal comprising steps of:
- allocating a relative charge level of the battery to each terminal of a group of terminals connected to the network in a determined geographical area around the first terminal, said relative charge level corresponding to an importance level of the predetermined terminal;
- measuring (72) the charge levels of the batteries of the terminals of the group; and
- selecting (76) a terminal of the group as being the second terminal (12) for ensuring that the charge level of the battery of each terminal of the group meets the relative charge level being allocated thereto.

3. The method according to any of claims 1 to 2, wherein the step of control comprises sub-steps of:
- defining (52) a plurality of intervals of charge levels of the battery (40);
- allocating (54) an operation rule of the first terminal (10) to each interval of charge level of the battery (40); and
- controlling (56) the operation of the first terminal (10) according to the rule allocated to the interval the measured charge level of the battery (40) belongs to.

4. The method according to claim 3, further comprising a step of storage of a table comprising the intervals of charge levels and the operation rules corresponding to the level of the first terminal (10) and/or of the network (2).

5. The method according to claim 3 or 4, wherein the operation rules are selected amongst:
- a restriction of a rate allocated to the operation of transmission of information; or
- a prohibition of the operation of transmission of information.

6. A system for managing the charge level of a battery (40) of a first mobile terminal (10) for the implementation of the method according to claim 1, comprising control means (20) for the operation of the first terminal (10), arranged for controlling an access of the first terminal (10) to at least one service of the network as a function of the charge level of the battery (40),
wherein, at least one second terminal (12) being connected to the network (2), the control means comprise means for:
- measuring charge levels of the batteries of a group of terminals connected to the network (2) in a determined geographical area around the first terminal (10);
- selecting a second terminal (12), as a connection relay of the first terminal (10) to the network (2), as being the closest terminal to the first terminal (10) and having a battery charge level being sufficient for carrying out the operation of transmission of information; and
- connecting the first terminal (10) to the network (2) via the second terminal (12).

7. A system for managing the charge level of a battery (40) of a first mobile terminal (10) for the implementation of the method according to claim 2, comprising control means (20) for the operation of the first terminal (10), arranged for controlling an access of the first terminal (10) to at least one service of the network (2) as a function of the charge level of the battery (40),
wherein, at least one second terminal (12) being connected to the network (2), the control means comprise means for:
- allocating a relative charge level of the battery to each terminal of a group of terminals connected to the network in a determined geographical area around the first terminal, said relative charge level corresponding to an importance level of the predetermined terminal;
- measuring the charge levels of the batteries of the terminals of the group;
- selecting a terminal of the group as being the second terminal (12), as a connection relay of the first terminal (10) to the network (2), for ensuring that the charge level of the battery of each terminal of the group meets the relative charge level being allocated thereto; and
- connecting the first terminal (10) to the network (2) via the second terminal (12).

8. The system for managing the charge level of a battery (40) of a first mobile terminal according to one of the claims 6 or 7, wherein, at least a second terminal (12) being connected to the network (2), the control means comprise means for:
- defining a plurality of intervals of charge levels of the battery (40);
- allocating an operation rule of the first terminal (10) to each interval of charge level of the battery (40); and
- controlling the operation of the first terminal (10) according to the rule allocated to the interval the measured charge level of the battery (40) belongs to.

9. A computer program comprising instructions for implementing the method according to any of claims 1 to 5 when the program is carried out by a processor.
